# FASCICULE DE BREVET EUROPEEN

(11) **EP 3 515 178 B1**
(45) Date de publication et mention de la délivrance du brevet: **04.11.2020**
(21) Numéro de dépôt: 17772621.3
(22) Date de dépôt: 11.09.2017
(51) Int. Cl.: A01G 31/04

(54) **INSTALLATION ET PROCÉDÉ DE PRODUCTION DE PLANTES EN AÉROPONIE/HYDROPONIE**
ANLAGE UND VERFAHREN ZUR PRODUKTION VON PFLANZEN DURCH AEROPONIK/HYDROPONIK.
INSTALLATION AND METHOD FOR PRODUCING PLANTS BY AEROPONIC/HYDROPONIC.

(30) Priorité: 20.09.2016 FR 1670537
(43) Date de publication de la demande: 31.07.2019
(73) Titulaire: Plant Advanced Technologies Pat, 54500 Vandoeuvre-les-Nancy (FR)
(72) Inventeur: FEVRE, Jean-Paul, René, 54410 Laneuveville-devant-Nancy (FR); HANNEWALD, Paul, François, 54990 Xeuilley (FR); MIGNARD, Benoît Simon, 31300 Toulouse (FR)
(74) Mandataire: Brungard, Yves Francois
(86) Numéro de dépôt international: PCT/EP2017/072690
(87) Numéro de publication internationale: WO 2018/054704

(56) Documents cités:
- WO-A1-2004/045273
- JP-A- S51 145 743
- JP-A- 2013 255 459
- JP-B2- 3 095 662
- JP-Y2- S5 045 955
- US-A- 4 327 538
- Plant Advanced Technologies PAT: "Plants, Factory of the Future - PAT plant milking technology", YouTube, 12 mars 2015 (2015-03-12), pages 1-1, XP054977405, Extrait de l'Internet: URL:https://www.youtube.com/watch?v=sbjjjh 4sfUY [extrait le 2017-05-31]

## Description

### DOMAINE DE L'INVENTION

L'invention concerne une installation et un procédé de production de plantes en aéroponie ou en hydroponie, en particulier dans le but d'en extraire des substances valorisables telles que des substances actives, en particulier pour des applications pharmaceutiques ou cosmétiques, et ce sans perte de viabilité des plantes.

### ART ANTÉRIEUR

Il a déjà été décrit, dans le document WO 01/33942 un procédé de production de métabolites selon lequel des plantes sont cultivées hors-sol et les substances d'intérêt sont obtenues par des opérations d'extraction qui ne mettent pas la plante en péril. Ainsi, on obtient une productivité intéressante, comparativement à des méthodes selon lesquelles on utilise la plante entière ou certaines parties seulement, en entraînant sa destruction, telles que la macération ou la distillation. Selon l'une des méthodes d'extraction décrites dans ce document, on procède par cycle en faisant grandir la plante qui développe à la fois sa partie aérienne et sa partie racinaire, puis on réalise une étape de perméabilisation des racines. Ensuite, on procède à une étape de récupération des métabolites au moyen d'un liquide mis en contact avec les racines par percolation ou par immersion. Après cette étape, les plantes sont éventuellement rincées et sont remises en culture pour un nouveau cycle. Le liquide collecté est ensuite traité pour séparer et augmenter la concentration en métabolites d'intérêt.

Ce document ne montre pas les moyens utilisables pour mettre en œuvre ce procédé.

Le document JP-H07-99847A montre une installation de culture hors-sol dans laquelle les plantes sont dans des pots portés par des plateaux et qui sont déplacés horizontalement de poste en poste. L'un de ces postes consiste à déplacer le plateau au-dessus d'une barre de coupe afin de débarrasser les pots des racines qui dépassent des pots par le dessous.

Une telle installation n'est pas adaptée à la mise en œuvre du procédé précédent.

Le document WO 2004/045273 A1 montre une installation de culture avec un éclairage artificiel, placé sur l'axe de tambours tapissés de plantes à l'intérieur. Les tambours sont sur un carrousel qui les amène par intervalles pour un trempage du substrat dans un liquide d'alimentation.

Le document JP S50 45955 Y2 montre une installation de culture en hydroponie dans laquelle des nacelles se déplacent en suivant une chaîne et en étant guidés sur des rails. L'installation comporte deux bacs entre lesquels les plateaux sont transférés par la chaîne.

### OBJECTIFS DE L'INVENTION

La méthode exposée le document WO 01/33942 a besoin d'être mise en œuvre à échelle industrielle, ce qui est maintenant l'objet de la présente demande.

### DESCRIPTION DE L'INVENTION

Avec ces objectifs en vue, l'invention a pour objet une installation de production de plantes en aéroponie/hydroponie comportant au moins une table, des plateaux mobiles sur la table destinés à supporter les plantes pour transférer les plantes sur différents postes de l'installation, les racines des plantes étant destinées à être suspendues sous les plateaux, l'installation étant caractérisée en ce qu'elle comporte un poste de trempage comportant un ascenseur pour descendre et monter au moins un plateau entre une position haute et une position basse de manière à tremper les racines dans un bac de trempage contenant un liquide pendant une durée prédéterminée en position basse, la table comportant une station de coupe, la station de coupe comportant une barre de coupe s'étendant soit transversalement et étant mobile longitudinalement relativement au plateau, soit longitudinalement et étant mobile transversalement, pour raccourcir l'une des parties des plantes sans que la survie de celles-ci soit compromise.

Les plantes sur le plateau peuvent être manipulées comme un grand ensemble en différents endroits en fonction du stade de développement. Le plateau sert de séparation entre la partie racinaire en-dessous et la partie aérienne au-dessus. Cet ensemble complet est ainsi amené sur l'ascenseur et les racines sont trempées dans le liquide qui réalise la récupération de métabolites par transfert dans le liquide. Ces moyens sont simples à mettre en œuvre et d'une grande efficacité, de part le grand nombre de plantes traitées en une seule opération. Les inventeurs se sont rendu compte qu'il était possible de récolter une partie des plantes pour en extraire les substances d'intérêt sans que la survie de celles-ci soit compromise. Cette récolte vient en complément de la récupération par trempage, pour valoriser d'autres substances ou d'autres concentrations de substance. Les parties récoltées peuvent ensuite être traitées par filtration, par décoction, par macération ou par distillation, selon la nature des plantes et des substances que l'on souhaite valoriser.

Selon une disposition constructive, la table comporte deux rails surélevés parallèles l'un à l'autre selon une direction longitudinale horizontale, les plateaux comportant des galets pour rouler sur les rails, l'ascenseur comportant deux tronçons de rails alignés avec les rails de la table lorsque l'ascenseur est dans la position haute. Avec de tels galets et rails, les plateaux peuvent être déplacés aisément, par exemple en étant poussés manuellement, avec peu d'efforts. Les plateaux roulent ainsi jusque sur l'ascenseur où ils sont pris en charge.

Selon un perfectionnement, un premier des deux rails comporte une première surface de roulement plate et horizontale, un deuxième des deux rails comporte une deuxième surface de roulement en relief, chaque plateau comportant au moins un premier galet cylindrique pour rouler sur la première surface et au moins deux deuxièmes galets à gorge dont la section est complémentaire à la deuxième surface pour réaliser un guidage linéaire du plateau sur la table. Un tel système garantit un guidage linéaire d'un côté du plateau, par les galets à gorge, sans contrainte du côté opposé, de manière à être tolérant aux défauts éventuels de parallélisme et aux différences de dilatation thermique ou aux déformations sous contrainte.

Selon une autre disposition constructive, la table comporte une bâche d'étanchéité relevée contre le rail et fixée par un plat de fixation, la bâche débordant vers le haut en forme de lèvre recourbée vers l'autre rail, venant en appui sous les plateaux, sur une surface inférieure d'étanchéité s'étendant horizontalement. L'étanchéité sert à limiter le passage de lumière sous les plateaux et éviter ainsi le développement de microorganismes par photosynthèse. Elle sert également à contenir les différents types de liquide utilisés pour l'alimentation des plantes par les racines ou pour le traitement de celles-ci, en particulier lorsque celui-ci est diffusé par brouillard. Cette étanchéité est réalisée très simplement par un débord de bâche utilisée pour délimiter un espace sous les plateaux.

Selon un perfectionnement, la barre de coupe s'étend sous le niveau des plateaux pour raccourcir la partie racinaire, la station de coupe comportant en outre un bac de collecte pour recevoir la partie coupée des plantes.

Selon une disposition constructive, le bac de collecte est incliné et comporte une rigole en partie basse. La récolte est ainsi facile à rassembler, et avec des moyens simples.

De préférence, la barre de coupe est réglable en hauteur. On peut ainsi adapter la récolte à la variété et au stade de développement des plantes.

Selon un perfectionnement, l'installation comporte au moins un chariot de transfert pour transporter au moins l'un des plateaux de l'une des tables à l'autre, et à l'extrémité de chaque table un guide transversal pour déterminer la position du chariot en regard de la table. Le guide transversal, qui peut être un rail au sol, permet de déterminer la position du chariot avec précision et de maintenir cette position pendant la manœuvre du plateau.

Selon une disposition constructive, le chariot comporte des tronçons de rails parallèles, au même écartement que les rails de la table pour prolonger les rails de roulement de la table et recevoir au moins l'un des plateaux, et des verrous aux extrémités des tronçons de rail du chariot pour bloquer en position le ou les plateaux.

Selon un autre perfectionnement, l'installation comporte une station d'essai destinée à recevoir l'un des plateaux, la station étant divisée transversalement en compartiments par des parois verticales ajustées sous le plateau, chaque compartiment comportant un circuit de liquide indépendant pour alimenter les plantes placées au-dessus dudit compartiment indépendamment des autres compartiments. Une telle station permet d'utiliser les mêmes plateaux pour conduire des essais comparatifs sur des subdivisions du plateau, en les soumettant à des conditions différentes que l'on peut maîtriser notamment par la nature du liquide qui alimente les plantes, et par la fréquence et la durée des arrosages.

L'invention a aussi pour objet un procédé de production de plantes en aéroponie/hydroponie dans lequel on dispose des plantes sur des plateaux avec la partie aérienne de la plante au-dessus du plateau et la partie racinaire au-dessous, on dispose les plateaux sur des tables formant zone de rétention pour collecter l'excédent d'un liquide diffusé vers les plantes, on transfère les plateaux sur les tables à différents postes de l'installation, le procédé étant caractérisé en ce qu'il comporte une étape de trempage dans laquelle on descend le plateau de manière à tremper les racines dans un bac de trempage contenant un liquide pendant une durée prédéterminée, on remonte le plateau, et on renouvelle l'opération avec d'autres plateaux, puis on collecte le liquide contenu dans le bac de trempage pour récupérer les métabolites transférés dans le liquide, l'étape de trempage étant suivie d'une étape de coupe dans laquelle la partie aérienne ou la partie racinaire des plantes est partiellement coupée pour récolter la partie coupée.

Selon un perfectionnement, l'étape de trempage est précédée d'une étape de stimulation dans laquelle au moins les parties racinaires reçoivent un liquide de stimulation. Le liquide de stimulation contient par exemple des sels, des tensioactifs, des détergents, des solvants, des éliciteurs d'origine fongique ou bactérienne, des dérivés de l'acide jasmonique, des générateurs d'éthylène, des chitines, des chitosans ou leurs mélanges. L'étape de stimulation peut aussi être réalisée par l'utilisation d'une solution nutritive carencée en azote, pendant 2 à 6 semaines avant l'étape de trempage. Cette étape de stimulation permet d'augmenter de manière significative la teneur des métabolites dans les racines et aussi de favoriser le flux comprenant les métabolites sortant des racines pendant l'étape de trempage et ce, sans perte de la viabilité de la plante afin qu'elle puisse être remise en culture.

Selon un perfectionnement, l'étape de trempage est précédée d'une étape de lavage dans laquelle le liquide diffusé vers les plantes est de l'eau claire, suivant l'éventuelle étape de stimulation. On limite ainsi l'apport des éléments contenus dans la solution nutritive ou dans l'éventuelle solution de stimulation lors de l'étape de trempage.

L'étape de trempage est suivie d'une étape de coupe dans lequel la partie aérienne ou la partie racinaire des plantes est partiellement coupée pour récolter la partie coupée. En plus de l'extraction des substances lors de l'étape de trempage, on extrait celles qui sont contenues dans la partie coupée.

Selon un perfectionnement, on extrait des substances d'intérêt de la partie coupée par macération, décoction ou distillation.

### BRÈVE DESCRIPTION DES FIGURES

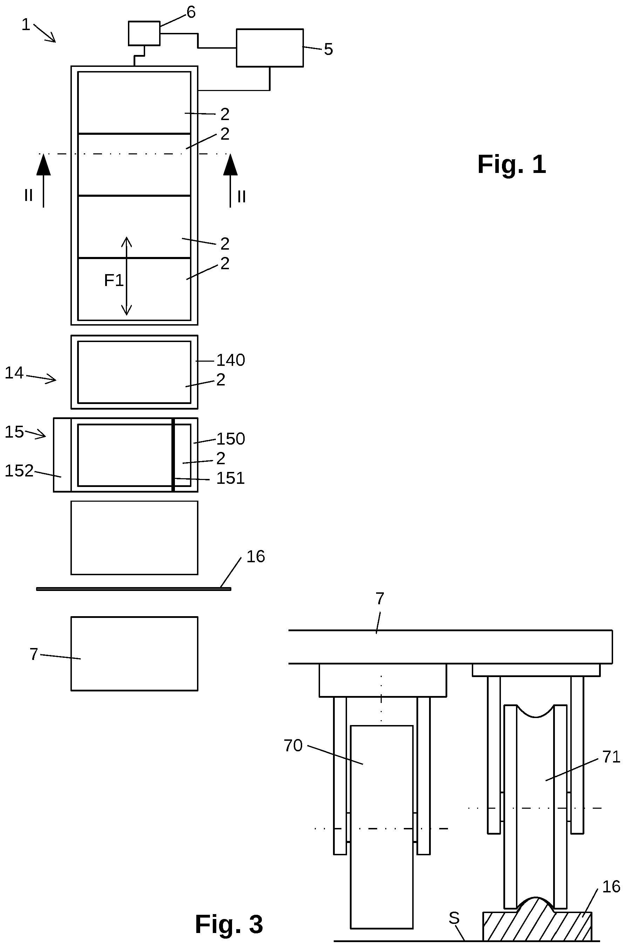

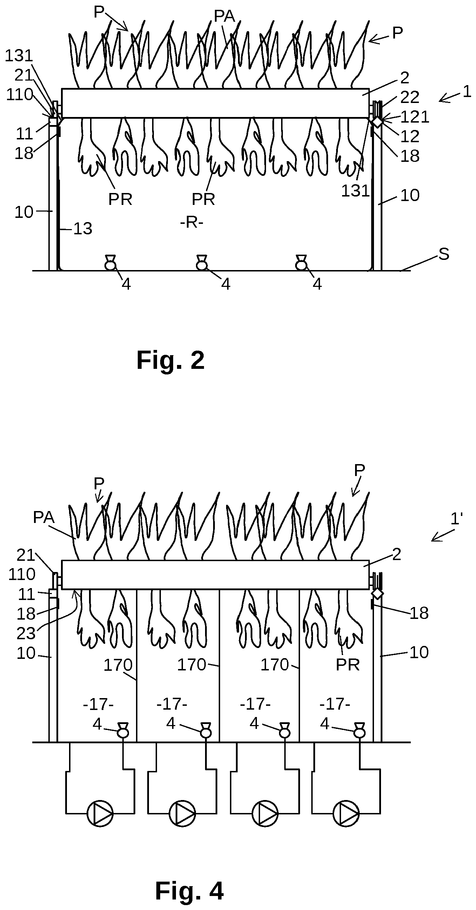

Pour une meilleure compréhension de l'invention, il est fait référence à la description qui suit et aux dessins annexés, parmi lesquels :
▷ la figure 1 est un plan schématique d'une installation conforme à un mode de réalisation de l'invention ;
▷ la figure 2 est une vue en coupe selon la ligne II-II de la figure 1 ;
▷ la figure 3 est une vue d'un détail d'un chariot faisant partie de l'installation ;
▷ la figure 4 est une vue similaire à la figure 2 d'une station d'essai faisant partie de l'installation.

### DESCRIPTION DÉTAILLÉE

Une installation de production de plantes P en aéroponie/hydroponie est représentée de manière schématique sur la figure 1. L'installation comporte une table 1 sur laquelle des plateaux 2 sont prévus mobiles en translation horizontale selon une direction longitudinale F1. Les plateaux 2 sont destinés à supporter les plantes P pendant leur croissance et à transférer les plantes P sur différents postes de l'installation. Seule une table 1 est représentée sur la figure, mais il faut comprendre qu'une installation peut en comprendre bien plus, pour augmenter la surface de production. L'installation est réalisée par exemple dans une serre.

Comme le montre la figure 2, la table 1 comporte des parois latérales le long desquelles est fixée une bâche d'étanchéité 13 opaque s'étendant d'un côté à l'autre, en passant sur le sol S pour former une zone de rétention R.

La table 1 comporte deux rails 11, 12 surélevés parallèles l'un à l'autre selon la direction longitudinale F1, supportés par les parois latérales 10. Les plateaux 2 comportent des galets 21, 22 pour rouler sur les rails 11, 12. Un premier des rails 11 est un tube de section carrée qui comporte une première surface de roulement 110 plate et horizontale. L'autre rail 12 est un tube également de section carrée, fixé avec des faces inclinées à 45°, de telle sorte qu'il comporte une deuxième surface 121 de roulement en relief, en forme de vé inversé. Chaque plateau 2 comporte deux premiers galets 21 cylindriques pour rouler sur la première surface et au moins deux deuxièmes galets 22 à gorge dont la section est complémentaire à la deuxième surface 121, donc en vé, pour réaliser un guidage linéaire du plateau 2 sur la table 1.

La bâche d'étanchéité 13 est relevée contre le rail 11, 12 et fixée par un plat de fixation 18. La bâche d'étanchéité 13 déborde vers le haut en forme de lèvre 131 recourbée vers l'autre rail 12, 11, venant en appui sous les plateaux 2, sur une surface inférieure d'étanchéité 23 s'étendant horizontalement. Un espace fermé est ainsi délimité sous les plateaux 2 et entre le sol S et les parois 10.

Les racines PR des plantes P sont suspendues sous les plateaux 2 dans cet espace. Pour alimenter les plantes P avec un liquide, non représenté, des rampes 4 de pulvérisation sont déposées au sol S sur la bâche de manière à créer par intermittence un brouillard, de manière connue en aéroponie. Le liquide en excédent est reçu sur la bâche d'étanchéité 13 et recyclé. Les rampes 4 sont alimentées par un réservoir 5 et une pompe 6 fournissant le liquide sous pression.

Selon l'invention, l'installation comporte un poste de trempage 14 comportant un ascenseur, non représenté, pour descendre et monter au moins un plateau 2 entre une position haute et une position basse de manière à tremper les racines PR dans un bac de trempage 140 contenant un liquide. Le trempage est réalisé pendant une durée prédéterminée en maintenant en position basse l'ascenseur et le plateau 2 qu'il supporte. L'ascenseur comporte deux tronçons de rails alignés avec les rails 11, 12 de la table 1 lorsque l'ascenseur est dans la position haute. Ainsi, on peut transférer un plateau 2 entre l'ascenseur et l'autre partie de la table 1 en faisant simplement rouler le plateau 2. La course est choisie pour que les plus longues racines PR soient hors du bac de trempage 140 en position haute.

La table 1 comporte en outre une station de coupe 15 placée juste à côté de la station de trempage. La station de coupe comporte une barre de coupe 151 s'étendant longitudinalement selon la direction F1 et mobile transversalement, c'est-à-dire dans une direction F2 perpendiculaire à la direction longitudinale F1. La station de coupe comporte en outre un bac de collecte 150 s'étendant sous toute l'étendue d'un plateau 2. Le bac de collecte 150 est incliné et comporte une rigole 152 en partie basse. La barre de coupe 151 permet de raccourcir la partie racinaire PR des plantes P d'un plateau 2, de manière à recevoir dans le bac de collecte 150 la partie coupée des plantes P. La barre de coupe 151 pourrait traiter plusieurs plateaux 2 ensembles. La barre de coupe 151 est réglable en hauteur de manière à pouvoir choisir la longueur résiduelle des racines PR après la coupe. La barre de coupe pourrait être placée transversalement et couper soit avec le mouvement du plateau 2, soit par un mouvement propre. Elle pourrait en outre être placée au-dessus du niveau des plateaux afin de couper la partie aérienne PA des plantes P. Dans ce cas, la partie coupée n'est pas récupérée dans le bac de collecte, mais manuellement sur le plateau, avec un râteau, ou de manière mécanique, ou encore avec un accessoire tel qu'une bande transporteuse, pour amener les parties coupées en bord de table 1.

L'installation comporte en outre au moins un chariot 7 de transfert pour transporter au moins l'un des plateaux 2 de l'une des tables 1 à l'autre. Comme montré sur la figure 3, le chariot 7 est muni de roulettes auto-orientables 70 lui permettant de rouler au sol dans différentes directions. L'installation comporte à l'extrémité de chaque table 1 un guide 16 transversal pour déterminer la position du chariot 7 en regard de la table 1. Le guide 16 est réalisé sous la forme d'un rail fixé au sol. Le chariot 7 comporte des roulettes de rail 71 destinées à s'engager sur le guide 16. Le guide 16 est placé suffisamment haut pour que lorsque les roulettes de rail 71 s'engagent sur le guide 16, le chariot 7 soit soulevé et que les roulettes auto-orientables 70 soient décollées du sol. Ainsi, le poids du chariot 7 est transféré sur le guide 16, ce qui assure un bon guidage du chariot 7. Les roulettes de rail 71 sont également suffisamment hautes pour ne pas toucher le sol lorsque le chariot 7 reposent sur les roulettes auto-orientables 70.

Par ailleurs, le chariot 7 comporte des tronçons de rails parallèles, non représentés, au même écartement que les rails 11, 12 de la table 1 pour prolonger les rails de la table 1 et recevoir au moins l'un des plateaux 2, et des verrous, non représentés, aux extrémités des tronçons de rail du chariot 7 pour bloquer en position le ou les plateaux 2. Les verrous sont formés par exemple d'une plaque montée pivotante selon un axe longitudinal et comportant une encoche en arc à la forme du rail. La plaque forme un obstacle au niveau du tronçon de rail lorsqu'elle est en butée contre le rail, mais libère celui-ci par un pivotement.

L'installation comporte une station d'essai 1' destinée à recevoir l'un des plateaux 2, représentée sur la figure 4. La station est divisée transversalement en quatre compartiments 17 par des parois verticales 170 ajustées sous le plateau 2, chaque compartiment 17 comportant un circuit de liquide indépendant pour alimenter les plantes P placées au-dessus dudit compartiment 17 indépendamment des autres compartiments 17. La station d'essai 1' comporte également des rails 11, 12 pour recevoir le plateau 2 et un volet, non représenté, qui, dans une première position, permet de laisser passer les racines PR dans les compartiments 17 lorsque le plateau 2 est mis en place, et une deuxième position dans laquelle les compartiments 17 sont fermés.

En production, les plantes P sont disposées sur les plateaux 2, par l'intermédiaire de supports, non représentés, avec la partie aérienne PA au-dessus du plateau 2 et la partie racinaire PR en-dessous. Les plateaux 2 sont disposés sur les tables, l'installation pouvant comporter plusieurs tables disposées côte à côte. Les plantes P sont alimentées par une solution nutritive qui est adaptée aux plantes P cultivées et à leur stade de développement. La solution nutritive peut être dispensée par le dessus des plateaux 2, par arrosage, ou par la création d'un brouillard dans l'espace sous les plateaux 2.

De 1 à 14 jours avant la récolte (étape de trempage), la solution nutritive est complétée par un liquide de stimulation afin d'augmenter la production de substances d'intérêt et de favoriser le relâchement de ces substances par la plante P.

Lorsque les plantes P sont prêtes pour une récolte, les racines PR sont lavées par de l'eau afin d'éliminer les résidus de la solution nutritive (complémentée par le liquide de stimulation ou carencée en azote). Cette étape de lavage est conduite par exemple en amont de l'ascenseur.

Ensuite, on procède à une étape de trempage dans laquelle on déplace l'un des plateaux 2 sur l'ascenseur en le faisant rouler sur les tronçons de rail, on descend le plateau 2 avec l'ascenseur de manière à tremper les racines PR dans un bac de trempage 140 contenant un liquide pendant une durée prédéterminée, et on remonte le plateau 2. On peut renouveler l'opération avec d'autres plateaux 2, puis collecter le liquide contenu dans le bac de trempage 140.

Le plateau 2 qui vient d'être traité à l'étape de trempage est déplacé sur la station de coupe 15. La barre de coupe 151 est actionnée et déplacée sous le plateau 2 de manière à couper la partie des racines PR qui s'étendent en deçà du plan de coupe. La partie coupée des racines PR tombent dans le bac de collecte 150. Le plateau 2 est évacué pour être placé sur une table 1 et remis en culture. Les racines sont poussées manuellement dans la rigole 152 pour être récupérées et traitées par une méthode classique.

L'invention n'est pas limitée au mode de réalisation qui a été décrit uniquement à titre d'exemple. Le déplacement des plateaux 2 peut être motorisé et automatisé, de même que le fonctionnement de l'ascenseur.

## Revendications

1. Installation de production de plantes (P) en aéroponie/hydroponie comportant au moins une table (1), des plateaux (2) mobiles sur la table (1) destinés à supporter les plantes (P) pour transférer les plantes (P) sur différents postes de l'installation, les racines (PR) des plantes (P) étant destinées à être suspendues sous les plateaux (2), l'installation comporte un poste de trempage (14) comportant un ascenseur pour descendre et monter au moins un plateau (2) entre une position haute et une position basse de manière à tremper les racines (PR) dans un bac de trempage (140) contenant un liquide pendant une durée prédéterminée en position basse, **caractérisé en ce que** a table (1) comporte une station de coupe (15), la station de coupe comportant une barre de coupe (151) s'étendant soit transversalement et étant mobile longitudinalement relativement au plateau, soit longitudinalement et étant mobile transversalement, pour raccourcir l'une des parties (PR, PA) des plantes (P) sans que la survie de celles-ci soit compromise.

2. Installation selon la revendication 1, dans laquelle la table (1) comporte deux rails (11, 12) surélevés parallèles l'un à l'autre selon une direction longitudinale horizontale, les plateaux (2) comportant des galets (21, 22) pour rouler sur les rails (11, 12), l'ascenseur comportant deux tronçons de rails alignés avec les rails (11, 12) de la table (1) lorsque l'ascenseur est dans la position haute.

3. Installation selon l'une des revendications précédentes, dans laquelle un premier des deux rails (11) comporte une première surface (110) de roulement plate et horizontale, un deuxième des deux rails (12) comporte une deuxième surface (121) de roulement en relief, chaque plateau (2) comportant au moins un premier galet (21) cylindrique pour rouler sur la première surface (110) et au moins deux deuxièmes galets (22) à gorge dont la section est complémentaire à la deuxième surface (121) pour réaliser un guidage linéaire du plateau (2) sur la table (1).

4. Installation selon l'une des revendications précédentes, dans laquelle la table (1) comporte une bâche d'étanchéité (13) relevée contre le rail (11, 12) et fixée par un plat de fixation (18), la bâche (13) débordant vers le haut en forme de lèvre (131) recourbée vers l'autre rail, venant en appui sous les plateaux (2), sur une surface inférieure d'étanchéité (23) s'étendant horizontalement.

5. Installation selon l'une des revendications précédentes, dans laquelle la barre de coupe (151) s'étend sous le niveau des plateaux pour raccourcir la partie racinaire (PR), la station de coupe (15) comportant en outre un bac de collecte (150) pour recevoir la partie coupée des plantes (P).

6. Installation selon la revendication 5, dans laquelle le bac de collecte (150) est incliné et comporte une rigole (152) en partie basse.

7. Installation selon l'une des revendications 1 à 6, dans laquelle la barre de coupe (151) est réglable en hauteur.

8. Installation selon l'une des revendications précédentes, **caractérisée en ce qu'**elle comporte au moins un chariot (7) de transfert pour transporter au moins l'un des plateaux (2) de l'une des tables à l'autre, et **en ce qu'**elle comporte à l'extrémité de chaque table (1) un guide (16) transversal pour déterminer la position du chariot (7) en regard de la table (1).

9. Installation selon la revendication 8, dans laquelle le chariot (7) comporte des tronçons de rails parallèles, au même écartement que les rails de la table (1) pour prolonger les rails de roulement de la table (1) et recevoir au moins l'un des plateaux (2), et des verrous aux extrémités des tronçons de rail du chariot (7) pour bloquer en position le ou les plateaux (2).

10. Installation selon l'une des revendications précédentes, **caractérisée en ce qu'**elle comporte une station d'essai (1') destinée à recevoir l'un des plateaux (2), la station étant divisée transversalement en compartiments (17) par des parois verticales (170) ajustées sous le plateau (2), chaque compartiment (17) comportant un circuit de liquide indépendant pour alimenter les plantes (P) placées au-dessus dudit compartiment (17) indépendamment des autres compartiments (17).

11. Procédé de production de plantes (P) en aéroponie/hydroponie dans lequel on dispose des plantes (P) sur des plateaux (2) avec la partie aérienne (PA) de la plante au-dessus du plateau (2) et la partie racinaire (PR) au-dessous, on dispose les plateaux (2) sur des tables formant zone de rétention pour collecter l'excédent d'un liquide diffusé vers les plantes (P), on transfère les plateaux (2) sur les tables (1) à différents postes de l'installation, le procédé étant **caractérisé en ce qu'**il comporte une étape de trempage dans laquelle on descend le plateau (2) de manière à tremper les racines (PR) dans un bac de trempage (140) contenant un liquide pendant une durée prédéterminée, on remonte le plateau (2), et on renouvelle l'opération avec d'autres plateaux (2), puis on collecte le liquide contenu dans le bac de trempage (140) pour récupérer les métabolites transférés dans le liquide, l'étape de trempage étant suivie d'une étape de coupe dans laquelle la partie aérienne ou la partie racinaire des plantes est partiellement coupée pour récolter la partie coupée.

12. Procédé selon la revendication 11, selon lequel l'étape de trempage est précédée d'une étape de stimulation dans laquelle au moins les parties racinaires (PR) reçoivent un liquide de stimulation.

13. Procédé selon la revendication 11 ou 12, selon lequel l'étape de trempage est précédée d'une étape de lavage dans laquelle le liquide diffusé vers les plantes est de l'eau claire, suivant l'éventuelle étape de stimulation.

14. Procédé selon l'une des revendications 11 à 13, selon lequel on extrait des substances d'intérêt de la partie coupée par macération, décoction ou distillation.

## Patentansprüche

1. Anlage zur aeroponischen/hydroponischen Pflanzenproduktion (P) bestehend aus mindestens einem Tisch (1), beweglich darauf gelagerten Tabletts (2) zur Stützung der Pflanzen (P) bei deren Transfer zu verschiedenen Stationen der Anlage, wobei die Wurzeln (PR) der Pflanzen (P) unter den Tabletts (2) in den Luftraum ragen, die Anlage eine Wässerungsstation (14) aufweist, die mit einem Aufzug zum Absenken und Anheben mindestens eines Tabletts (2) zwischen einer oberen und einer unteren Position versehen ist, um die Wurzeln (PR) in der unteren Position über einen zuvor festgelegten Zeitraum in ein mit einer Flüssigkeit gefüllten Wässerungsbecken (140) einzutauchen; die **dadurch gekennzeichnet ist, dass** der Tisch (1) eine Schneidstation (15) mit einem Schneidbalken (151) aufweist, der sich entweder in Querrichtung erstreckt und sich längs zum Tablett bewegen lässt, oder sich in Längsrichtung erstreckt und sich quer zum Tablett bewegen lässt, um eines der Teile (PR, PA) der Pflanzen (P) kürzen zu können, ohne dadurch deren Fortbestehen zu gefährden.

2. Anlage gemäß Anspruch 1, bei der der Tisch (1) zwei in einer waagrechten Längsrichtung parallel zueinander angeordnete, erhöhte Schienen (11, 12) aufweist, wobei die Tabletts (2) Gleitrollen (21, 22) für die Bewegung auf den Schienen (11, 12) aufweisen und der Aufzug zwei Schienenabschnitte aufweist, die, wenn der Aufzug sich in der oberen Position befindet, mit den Schienen (11, 12) des Tischs (1) fluchten.

3. Anlage gemäß einem den vorangehenden Ansprüche, bei der eine erste der beiden Schienen (11) eine erste, flache und waagrechte Lauffläche (110) und eine zweite der beiden Schienen (12) eine zweite, erhabene Lauffläche (121) aufweist, wobei jedes Tablett (2) mindestens eine erste zylindrische Laufrolle (21) für die Bewegung auf der ersten Oberfläche (110) und mindestens zwei zweite Laufrollen (22) mit Nut aufweist, deren Querschnitt die zweite Oberfläche (121) dergestalt ergänzt, dass auf dem Tisch (1) eine lineare Führung für das Tablett (2) entsteht.

4. Anlage gemäß einem der vorangehenden Ansprüche, bei dem der Tisch (1) eine gegenüber der Schiene (11, 12) angehobene und mit einer Befestigungsplatte (18) befestigte Abdichtungsplane (13) aufweist, die nach oben hin in Form einer zur anderen Schiene hin gekrümmten Lippe (131) übersteht und dabei über eine sich waagrecht erstreckende untere Abdichtungsfläche (23) an der Unterseite der Tabletts (2) anliegt.

5. Anlage gemäß einem der beiden vorangehenden Ansprüche, bei der der Schneidbalken (151) zur Kürzung des Wurzelteils (PR) sich unterhalb der Ebene der Tabletts erstreckt, wobei die Schneidstation (15) ferner einen Auffangbehälter (150) zur Aufnahme des abgeschnittenen Teils der Pflanzen (P) aufweist.

6. Anlage gemäß Anspruch 5, bei der der Auffangbehälter (150) geneigt ist und im unteren Teil eine Rinne (152) aufweist.

7. Anlage gemäß einer der Forderungen 1 bis 6, bei der der Schneidbalken (151) höhenverstellbar ist.

8. Anlage gemäß einem der vorangehenden Ansprüche, die **dadurch gekennzeichnet ist, dass** sie mindestens einen Verschiebeschlitten (7) für den Transport mindestens eines der Tabletts (2) von einem der Tische zum nächsten und am Ende jedes Tischs (1) eine Querführung (16) zur Bestimmung der Position des Schlittens (7) gegenüber dem Tisch (1) aufweist.

9. Anlage gemäß Anspruch 8, bei der der Schlitten (7) Abschnitte mit parallel zueinander verlaufenden Schienen derselben Spurweite wie die Schienen des Tischs (1) zur Verlängerung der Laufschienen des Tischs (1) und zur Aufnahme mindestens eines der Tabletts (2) aufweist sowie Riegel an den Enden der Schienenabschnitte des Schlittens (7), um das Tablett bzw. die Tabletts (2) an Ort und Stelle zu arretieren.

10. Anlage gemäß einem der vorangehenden Ansprüche, die **dadurch gekennzeichnet ist, dass** diese eine Prüfstation (1') zur Aufnahme eines der Tabletts (2) aufweist, wobei die Station in Querrichtung durch unter dem Tablett (2) ausgerichtete senkrechte Wände (170) in Fächer (17) unterteilt ist, wobei jedes Fach (17) einen unabhängigen Flüssigkeitskreislauf für die Versorgung der Pflanzen (P) aufweist, die oberhalb besagten Fachs (17) unabhängig von den übrigen Fächern (17) angeordnet sind.

11. Verfahren zur aeroponischen/hydroponischen Pflanzenproduktion (P), bei dem die Pflanzen (P) auf Tabletts (2) gelagert werden und der oberirdische Teil der Pflanze (PA) sich oberhalb des Tabletts (2) und der Wurzelteil (PR) sich darunter befindet, die Tabletts (2) auf Tischen gelagert werden, die einen Rückhaltebereich zum Auffangen des Überschusses einer zu den Pflanzen (P) geleiteten Flüssigkeit bilden; die Tabletts (2) auf den Tischen (1) zu verschiedenen Stationen der Anlage transferiert werden, wobei das Verfahren **dadurch gekennzeichnet ist, dass** es einen Wässerungsschritt beinhaltet, bei dem das Tablett (2) so abgesenkt wird, dass die Wurzeln (PR) über einen zuvor festgelegten Zeitraum in ein mit einer Flüssigkeit gefülltes Wässerungsbecken (140) eintauchen, das Tablett (2) danach angehoben und der Vorgang mit weiteren Tabletts (2) wiederholt wird, im Anschluss die im Wässerungsbecken (140) enthaltene Flüssigkeit aufgenommen wird, um die in diese übergegangenen Metabolite zurückzugewinnen, wobei sich an den Wässerungsschritt ein Schneidschritt anschließt, bei dem der oberirdische oder der Wurzelteil der Pflanze teilweise abgeschnitten wird, um das abgeschnittene Teil zu ernten.

12. Verfahren gemäß dem Anspruch 11, dem zufolge dem Wässerungsschritt ein Stimulierungsschritt vorangeht, bei dem zumindest die Wurzelteile (PR) eine stimulierende Flüssigkeit erhalten.

13. Verfahren gemäß dem Anspruch 11 oder 12, dem zufolge dem Wässerungsschritt ein Waschschritt vorangeht, bei dem es sich bei der den Pflanzen zugeführten Flüssigkeit um klares Wasser handelt, der sich an den eventuellen Stimulierungsschritt anschließt.

14. Verfahren gemäß einem der Ansprüche 11 bis 13, bei dem Substanzen von Interesse durch Mazerieren, Abkochen oder Destillieren aus dem geschnittenen Teil extrahiert werden.

## Claims

1. Aeroponics/hydroponics-based plant (P) production installation comprising at least one table (1), mobile trays (2) on the table (1) designed to support the plants (P) and transfer the plants (P) to different stations on the installation, the roots (PR) of the plants (P) being left to hang under the trays (2), the installation comprising a soaking station (14) that has an elevator for lowering and lifting at least one tray (2) between a high position and a low position in order to soak the roots (PR) in a soaking tank (140) containing a liquid for a predetermined time in the low position, **characterised by** the fact the table (1) comprises a cutting station (15), the cutting station comprising a cutting bar (151) extending transversely and being longitudinally mobile with respect to the tray, or longitudinally and being transversely mobile, to shorten one of the parts (PR, PA) of the plants (P) without their survival being compromised.

2. Installation as per claim 1 in which the table (1) comprises two raised rails (11, 12) parallel to each other in a longitudinal horizontal direction, the trays (2) comprising rollers (21, 22) for rolling along the rails (11, 12), the elevator comprising two sections of rails aligned with rails (11, 12) of table (1) when the elevator is in the high position.

3. Installation as per one of the above claims in which one of the two rails (11) comprises a lower flat and horizontal rolling surface (110), the other of the two rails (12) comprises a second raised rolling surface (121), each tray (2) comprising at least one first cylindrical roller (21) for rolling on the first surface (110) and at least two second grooved rollers (22) whose cross-section is complementary to the second surface (121) to provide linear guidance for the tray (2) on the table (1).

4. Installation as per one of the above claims in which the table (1) comprises a watertight liner (13) raised against the rail (11, 12) and fixed by a flat attachment strip (18), the liner (13) overlapping upwards in the form of a lip (131) curving towards the other rail, coming into contact under the trays (2), on a lower watertight surface (23) extending horizontally.

5. Installation as per one of the above claims in which the cutting bar (151) extends below the level of the trays to shorten the root part (PR), the cutting station (15) also comprising a collection tray (150) for receiving the cut part of the plants (P).

6. Installation as per claim 5 in which the collection tray (150) is tilted and includes a channel (152) in its lower part.

7. Installation as per one of the claims 1 to 6 in which the height of the cutting bar (151) can be adjusted.

8. Installation as per one of the above claims **characterised by** the fact it comprises at least one transfer trolley (7) for transporting at least one of the trays (2) from one of the tables to the other one, and by the fact it comprises at the end of each table (1) a transversal guide (16) for determining the position of the trolley (7) with respect to the table (1).

9. Installation as per claim 8 in which the trolley (7) comprises sections of parallel rails, separated by the same distance as the rails of table (1) to extend the rolling rails of table (1) and receive at least one of the trays (2), and latches at the ends of the sections of the rail for the trolley (7) to lock the tray(s) (2) in position.

10. Installation as per one of the above claims **characterised by** the fact it comprises a test station (1') designed to receive one of the trays (2), the station being divided transversely into compartments (17) by vertical walls (170) fitted under the tray (2), each compartment (17) comprising an independent liquid circuit for feeding the plants (P) placed above said compartment (17) independently from the other compartments (17).

11. Aeroponics/hydroponics-based plant (P) production process in which plants (P) are placed on trays (2) with the aerial part (PA) of the plant above the tray (2) and the root part (PR) underneath, the trays (2) are placed on tables forming a retention zone for collecting any excess liquid diffused to the plants (P), the trays (2) are transferred to the tables (1) at different stations in the installation, the process being **characterised by** the fact it includes a soaking step in which the tray (2) is lowered in such a way as to soak the roots (PR) in a soaking tank (140) containing a liquid for a predetermined time, the tray (2) is raised, and this operation is repeated with other trays (2), then the liquid contained in the soaking tank (140) is collected to recover the metabolites transferred to the liquid, the soaking step being followed by a cutting step in which the aerial part or the root part of the plants is partially cut to harvest the cut part.

12. Process as per claim 11 whereby the soaking step is preceded by a stimulation step in which at least the root parts (PR) receive a stimulation liquid.

13. Process as per claim 11 or 12 whereby the soaking step is preceded by a washing step in which the liquid diffused to the plants is clean water, following the stimulation step where applicable.

14. Process as per one of the claims 11 to 13 whereby substances of interest are extracted from the cut part by maceration, decoction or distillation.
